# EUROPEAN PATENT SPECIFICATION

(11) **EP 3 904 742 B1**
(45) Date of publication and mention of the grant of the patent: **23.08.2023**
(21) Application number: 21170241.0
(22) Date of filing: 23.04.2021
(51) Int. Cl.: F16K 11/16, F16K 31/53

(54) **VALVE ASSEMBLY AND CONTROL VALVE ASSEMBLY**
VENTILANORDNUNG UND STEUERVENTILANORDNUNG
ENSEMBLE SOUPAPE ET ENSEMBLE SOUPAPE DE COMMANDE

(30) Priority: 28.04.2020 CN 202020681626 U
(43) Date of publication of application: 03.11.2021
(73) Proprietor: Siemens Schweiz AG, 8047 Zürich (CH)
(72) Inventor: Pan, Xiao Lin, Tian Jin, 300000 (CN); Zhan, Ning, Xibeiwang,Haidian,Beijing City, 100094 (CN); Zhong, Fu Lai, Tianjin, 300000 (CN)
(74) Representative: Siemens Patent Attorneys

(56) References cited:
- WO-A1-02/065007
- CN-U- 207 514 340
- CN-U- 208 919 351
- CN-Y- 2 209 255
- GB-A- 2 007 808
- US-A1- 2005 045 842

## Description

### Technical field

The present disclosure relates to the technical field of valves, in particular to a valve assembly and a control valve assembly having the valve assembly.

### Background art

A control valve assembly comprises a valve assembly and an actuator. The valve assembly generally employs hard sealing or soft sealing. Hard sealing has a low cost, but the quality of sealing achieved thereby could be improved. To achieve better quality of sealing, the valve assembly can also employ soft sealing. An existing valve assembly using soft sealing requires the use of sealing structures such as seal rings and sealing rings at multiple positions, resulting in a complex overall structure and a high production cost. At the same time, the valve assembly with soft sealing requires a flexible sealing member to have high durability. Thus there is a need to propose a valve assembly with a novel structure.

A Chinese utility model CN208919351U was filed on 15 November 2017. The utility model CN208919351U was granted on 31 May 2019. CN208919351U deals with a valve assembly of a control valve according to the preamble of claim 1.

A Chinese utility model CN2209255Y was filed on 5 December 1994. The utility model CN2209255Y was granted on 4 October 1995. CN2209255Y deals with non-metallic bellows combination sealing member.

An international patent application WO02/065007A1 was filed by ZHOU SHIYOU on 9 February 2002. The application was published on 22 August 2002. WO02/065007A1 deals with a valve.

A Chinese utility model CN207514340U was filed on 15 November 2017. The utility model CN207514340U was granted on 19 June 2018. CN207514340U deals with a valve module.

A patent application GB2007808A was filed by SANBRA FYFFE LTD on 7 November 1978. The application was published on 23 May 1979. GB2007808A deals with a stop valve assembly.

A patent application US2005/045842A1 was filed on 25 August 2003. The application was published on 3 March 2005. US2005/045842A1 deals with a tubeless actuator having a reduced secondary air gap.

### Summary

An object of the present disclosure is to provide a valve assembly and a control valve assembly having the valve assembly, which adopt structurally simple soft sealing, and can effectively reduce production costs while fully guaranteeing the reliability of sealing.

Another object of the present disclosure is to provide a valve assembly and a control valve assembly having the valve assembly, the soft sealing adopted therein having durability, improved reliability and an extended service life.

A further object of the present disclosure is to provide a valve assembly or control valve assembly, which adopts structurally simple soft sealing, and provides double soft sealing with better sealing performance, thereby avoiding outward leakage.

A further object of the present disclosure is to provide a valve assembly or control valve assembly, the structure thereof being adapted for firm connection to an actuator, thus simplifying the structure and increasing the firmness of connection.

According to the invention, the valve assembly comprises: a valve body forming an internal cavity, the valve body further comprising a valve seat part, the valve seat part being located in the internal cavity and dividing the internal cavity of the valve body into an inlet channel and an outlet channel, a communication port being formed in the valve seat part, the communication port connecting the inlet channel and the outlet channel, and a mounting port also being formed in the valve body, the mounting port facing the communication port; a valve cap, adapted to be mounted at the mounting port; a valve rod, movably passed through the valve cap; a valve plug, mounted to one end of the valve rod and able to extend into the internal cavity under the driving action of the valve rod, the valve plug having a neck part extending in the axial direction thereof and an end part extending out transversely from the neck part, wherein, in a closed position, the end part abuts the valve seat part, thereby blocking fluid communication at the communication port, and in an open position, the end part is remote from the communication port, thereby enabling fluid communication; and a sealing member, being a flexible sealing member, and configured to at least envelop the valve plug and a side of the valve cap which faces the communication port, so as to isolate the valve cap, the valve rod and the valve plug from the internal cavity of the valve body in a sealed manner; wherein the sealing member has a redundant part; when the valve plug is at an open position, the redundant part is piled at the neck part of the valve plug. Preferably, the valve cap is embedded in the mounting port. By using such soft sealing and retaining redundancy, the service life of the sealing member can be extended and product reliability is improved. The sealing member is an elastic diaphragm.

In another embodiment, the valve cap has a recess at a side facing the communication port, one end of the valve rod passing through the valve cap and extending into the recess; an upper end of the neck part of the valve plug extends into the recess of the valve cap movably, and is securely connected to the valve rod; wherein a sealing ring is provided between the neck part of the valve plug and an inner wall of the recess. Preferably, a circumferentially extending groove is formed on a peripheral surface of the neck part, for the purpose of accommodating the sealing ring. The sealing ring disposed between the valve plug and valve cap forms a double seal together with the sealing member, and this can avoid leakage. In particular, when the sealing member has broken due to fatigue, the sealing ring can still achieve a certain degree of sealing.

In one embodiment, the valve cap has a body and a security ring part extending out from the body, wherein the body is completely embedded in the mounting port; the security ring part has a smaller diameter than the internal diameter of the mounting port and extends out of the mounting port, and the security ring part is adapted to be connected through engagement to an actuator for controlling the valve assembly. Preferably, an inner wall of the mounting port of the valve body is provided with an internal thread, and an outer wall of the body of the valve cap is provided with an external thread, wherein a thread-locking adhesive is applied between the internal thread and the external thread. The design of the security ring part enables the actuator to be engaged on the valve assembly more firmly, so that it is not likely to fall off. According to the invention, the valve cap has a keyway at a side remote from the communication port, and can thereby be installed easily. More preferably, a slot is provided on an end face at that end of the valve rod which is positioned outside the valve cap, for the purpose of installing or removing the valve rod.

In another embodiment, the control valve assembly comprises; an actuator, and a valve assembly as described above, wherein the actuator can be connected to the valve rod and can drive the valve rod to move axially relative to the valve cap, thereby driving the valve plug to shift between the open position and the closed position.

Preferred embodiments are explained below in a clear and easily comprehensible way with reference to the accompanying drawings, to further explain the abovementioned characteristics, technical features and advantages of the valve assembly and control valve and embodiments thereof.

### Brief description of the drawings

The accompanying drawings below merely illustrate and explain the present disclosure schematically, without limiting the scope thereof.
Fig. 1 is a sectional schematic structural diagram illustrating a schematic embodiment of the valve assembly.
Fig. 2 is a schematic sectional view of the assembled structure of the valve cap, valve rod, valve plug and sealing member in the valve assembly shown in Fig. 1.
Fig. 3 is a three-dimensional schematic drawing of the valve cap shown in Fig. 1.
Fig. 4 is a three-dimensional schematic drawing of the valve body shown in Fig. 1.

### Detailed description

To enable clearer understanding of the technical features, objectives and effects of the disclosure, particular embodiments of the present disclosure are now explained with reference to the accompanying drawings, in which identical labels indicate structurally identical components or components with similar structures but identical functions.

As used herein, "schematic" means "serving as an instance, example or illustration". No drawing or embodiment described herein as "schematic" should be interpreted as being a more preferred or more advantageous technical solution.

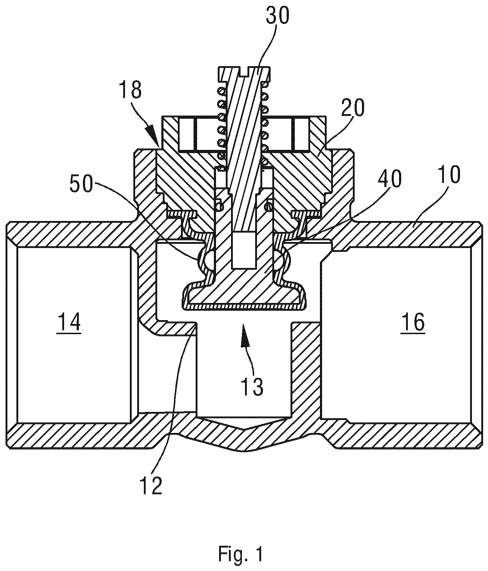

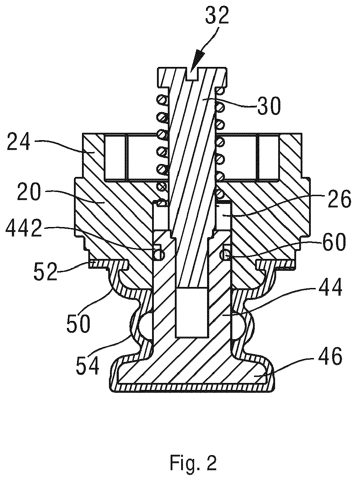

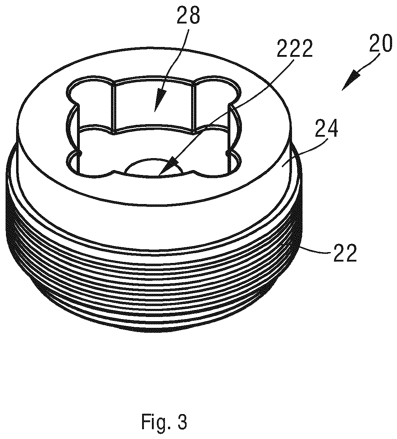

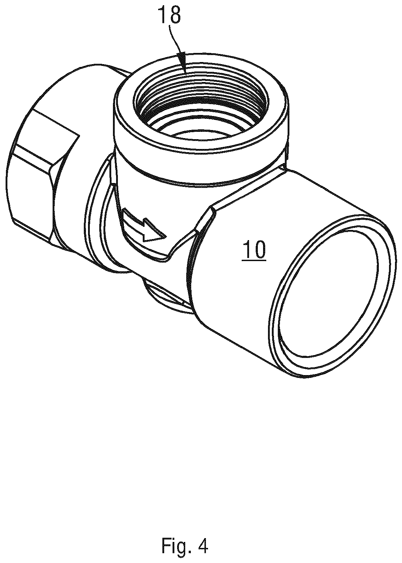

Fig. 1 is a sectional schematic structural diagram illustrating a schematic embodiment of the valve assembly. Referring to Fig. 1, the valve assembly comprises a valve body 10, a valve cap 20, a valve rod 30, a valve plug 40 and a sealing member 50. Fig. 2 is a schematic sectional view of the assembled structure of the valve cap, valve rod, valve plug and sealing member in the valve assembly shown in Fig. 1. Figs. 3 and 4 are schematic three-dimensional drawings of the valve cap and the valve body shown in Fig. 1 respectively. The valve assembly according to the present disclosure is described below in conjunction with Figs. 1 - 4.

An internal cavity is formed inside the valve body 10. The valve body 10 further comprises a valve seat part 12. The valve seat part 12 is located in the internal cavity, and divides the internal cavity of the valve body 10 into an inlet channel 14 and an outlet channel 16. A communication port 13 connecting the inlet channel 14 and the outlet channel 16 is formed in the valve seat part 12. Here, the functions of the inlet channel 14 and outlet channel 16 are not defined, but may be switched as required in actual use, e.g. such that a medium flows in through the outlet channel 16 and flows out through the inlet channel 14.

As shown in Fig. 1, a mounting port 18 facing the communication port 13 is also formed in the valve body 10. The valve cap 20 is mounted at the mounting port 18. The valve cap 20 can be inserted into the mounting port 18, or cover the mounting port 18 in another schematic embodiment. Preferably, the valve cap 20 is embedded in the mounting port 18 as shown in Fig. 1.

The valve rod 30 is movably passed through the valve cap 20. As shown in Figs. 1 and 4, the valve cap 20 is provided with a through-hole 222 at a central position of a body 22 thereof. The valve rod 30 can pass through the through-hole 222, and at the same time is configured to be movable relative to the valve cap 20 in the axial direction of the valve rod. Thus, one end of the valve rod 30 can pass through the valve cap 20 and extend into the valve body, while another end is kept outside the valve body 10, so as to be driven by an actuator.

The valve plug 40 is mounted to that end of the valve rod 30 which extends into the valve body 10, and can extend into the internal cavity of the valve body under the driving action of the valve rod 30. As shown in Figs. 1 and 2, the valve plug 40 has a neck part 44 extending in the axial direction thereof, and an end part 46 extending out transversely from the neck part. In a closed position, the end part 46 of the valve plug 40 abuts the valve seat part 12, thereby blocking fluid communication at the communication port 13; in an open position, the end part 46 of the valve plug 40 is remote from the valve seat part 12, i.e. remote from the communication port 13, thereby enabling fluid communication. In a schematic embodiment, the valve rod 30 and valve plug 40 may employ a threaded connection, an interference connection or another manner of connection. For convenience of assembly and disassembly, a threaded connection is employed between the valve rod 30 and valve plug 40 in the embodiment shown in Fig. 1. Thus, a slot is preferably provided at an upper end part of the valve rod 30, so that a tool can be used to turn the valve rod 30 and thereby screw it tightly into the valve plug. By way of example, the upper end part of the valve rod 30 is shown as being provided with a linear slot in Figs. 1 and 2; this can be easily turned with a flat-blade screwdriver. Optionally, the upper end part of the valve rod 30 may also be provided with a cross-shaped slot or inner polygonal slot, etc., for use with different types of tools.

In Fig. 1, the sealing member 50 is a one-piece flexible sealing member, preferably an elastic diaphragm, and more preferably a rubber diaphragm, which envelops the valve plug 40 and a side of the valve cap 20 which faces the mounting port 18, so as to isolate the valve cap 20, valve rod 30 and valve plug 40 from the internal cavity of the valve body 10 in a sealed manner. As a complete elastic diaphragm, the sealing member 50 can not only achieve soft sealing, but can also adapt to short-travel movement of the valve plug 40. With regard to the soft sealing, specifically, since the sealing member 50 is configured to envelop the valve plug 40, the sealing member 50 can achieve soft sealing between the valve plug 40 and the valve seat part 12 when the valve plug 40 abuts the valve seat part 12. Further, since the sealing member 50 also envelops the valve cap 20, the sealing member 50 can also achieve soft sealing between the valve cap 20 and the valve body 10 at the same time. Further, since the sealing member 50 envelops the valve cap 20, valve rod 30 and valve plug 40 as a whole, there is no need for separate sealing between the valve rod 30 and valve cap 20.

Moreover, in Figs. 1 and 2, the sealing member 50 is, according to the invention, also provided with a redundant part 54. When the valve plug 40 is at the open position, i.e. when the end part 46 of the valve plug 40 is remote from the valve seat part 12, the redundant part 54 of the sealing member 50 is piled or stowed at the position of the neck part 44 of the valve plug 40, as shown in Figs. 1 and 2. When the valve plug 40 is at the closed position, the sealing member 50 extends as the valve plug 40 moves, and the redundant part 54 thereof also extends accordingly, being fully extended and lying against the neck part 44 of the valve plug when the valve plug 40 abuts the valve seat. Due to the redundant part 54, the sealing member no longer relies solely on its own elastic deformation allowance to adapt to the movement travel of the valve plug; instead, the redundant part 54 makes up for the limited elastic deformation allowance. Thus, the sealing member 50 having the redundant part can have a longer service life, and can adapt to scenarios in which the travel of the valve plug is longer.

The sealing member 50 can achieve effective soft sealing throughout the course of movement of the valve plug. The sealing member 50 is also provided with an annular sealing part 52. The annular sealing part 52 is fitted round a lower edge of the valve cap 20 in a circumferential direction, and seals a gap between the valve cap 20 and the valve body 10.

In the valve assembly provided in the present disclosure, the sealing member 50 envelops those parts of the valve cap 20 and valve plug 40 which face the internal cavity, such that the valve cap 20, valve rod 30 and valve plug 40 are isolated from the internal cavity of the valve body 10 in a sealed manner. Soft sealing between the valve cap 20 and valve body 10, and soft sealing between the valve plug 40 and valve seat part 12, can be achieved at the same time. Moreover, there is no need for separate sealing between the valve rod 30 and valve cap 20, thus the structure of the valve assembly is simplified and production costs can be effectively reduced.

In a schematic embodiment, referring to Figs. 1, 3 and 4, the valve cap 20 is substantially cylindrical, can be inserted into the mounting port 18 in the axial direction, and can be embedded in the mounting port 18, i.e. the body 22 of the valve cap 20 is embedded in the valve body 10. In a schematic embodiment, a peripheral surface of the valve cap 20 has an external thread, the valve body 10 has an internal thread at the mounting port 18, and the valve cap 20 and valve body 10 employ a threaded connection. Preferably, a thread-locking adhesive is further provided between the valve cap 20 and the thread at the mounting port 18. The thread-locking adhesive is an anaerobic adhesive, which can be used both for bonding and for sealing. As the valve cap and mounting port threads are screwed tightly together, the thread-locking adhesive that was originally liquid quickly cures due to being isolated from air, thereby not only bonding the valve cap 20 into the mounting port 18 of the valve body 10, but also achieving sealing at the same time, so as to inhibit and/or prevent leakage of fluid from the mounting port. At the same time, the mounting of the sealing member 50 is dependent on the valve cap 20 and valve body 10 being pressed tightly together, with the annular sealing part 52 of the sealing member 50 being pressed tightly between the valve cap 20 and the valve body 10. Thus, not only is fluid sealing between the valve body 10 and valve cap 20 achieved by the sealing member 50, outward leakage is also inhibited and/or prevented by the thread-locking adhesive, thus achieving double sealing here.

According to the invention, as shown in Fig. 3, the valve cap 20 has a keyway 28 at a side remote from the communication port 13, i.e. at a top surface in the figure, so as to use a tool to screw the valve cap 20 tightly into the mounting port 18 of the valve body 10.

As shown in Figs. 1, 2 and 3, the valve cap 20 has a centrally located through-hole 222; the valve rod 30 passes through this through-hole movably, such that one end of the valve rod 30 can extend into the valve body. As shown in Figs. 1 and 2, the valve cap 20 has a recess 26 at a side facing the communication port 13. One end of the valve rod 30 passes through the through-hole 222 in the centre of the valve cap 20 and extends into the recess 26. The size of the recess 26 is also adapted to accommodate an upper end of the neck part 44 of the valve plug 40. The neck part 44 extends into the recess 26 of the valve cap 20 movably, and is securely connected to one end of the valve rod 30. Preferably, a sealing ring 60 is further provided between the neck part 44 of the valve plug 40 and an inner wall of the recess 26. More preferably, a circumferentially extending groove 446 may also be formed on a peripheral surface of the neck part 44, for the purpose of accommodating the sealing ring 60. With such a design, the connection and fitting of the valve rod 30 and valve plug 40 to each other can be accomplished simply in an easy operation. Double sealing of the valve plug and valve cap is achieved at the same time; this includes a first layer of sealing provided by the sealing member 50, and a second layer of sealing provided by the sealing ring 60. Thus, in the unlikely event that the sealing member 50 breaks due to fatigue and loses its sealing ability, the sealing ring 60 between the valve plug and valve cap can still work, inhibiting and/or preventing fluid leakage.

As shown in Figs. 1 and 3, the valve cap 20 also has a security ring part 24 extending out from the body 22. The body 22 can be completely embedded in the mounting port 18. The security ring part 24 has a smaller diameter than the diameter of the body 22 (internal diameter of the mounting port 18), and can extend out of the mounting port 18. The security ring part 24 is adapted to be connected through engagement to a mounting claw at the bottom of an actuator, thereby strengthening a firm connection between the valve assembly and the actuator. In other words, since a main body of the valve cap 20 is embedded in the mounting port 18, with the security ring part 24 extending out and being connected through engagement to the actuator, the valve assembly is connected firmly to the actuator, and detachment from the valve assembly due to the actuator sustaining a lateral force will not occur.

In a schematic embodiment, referring to Figs. 1 and 2, a return spring is fitted round the valve rod 30 at the side of the valve rod 30 that is located outside the valve body 10, with two ends of the return spring 60 abutting the valve cap 20 and an end part of the valve rod 30 respectively. The return spring 60 can drive the valve rod 30 to move and drive the valve plug 40 back to the open position, i.e. open the communication port 13, when the valve assembly resets.

In a schematic embodiment, referring to Fig. 2, preferably, due to the soft sealing afforded by the sealing member, cheaper materials can be used for the valve cap 20, valve rod 30 and valve plug 40, thereby reducing material costs, and further reducing the production cost of the valve assembly.

The present disclosure further provides a control valve assembly, comprising an actuator and a valve assembly as described above. The actuator can be connected to the valve rod 30 and can drive the valve rod 30 to move axially relative to the valve cap 20, thereby driving the valve plug 40 to shift between the open position and the closed position. The actuator can also be clamped firmly on the security ring part of the valve cap by means of a mounting claw. This also increases the stability and security of mounting of the actuator.

It should be understood that although the description herein is based on various embodiments, it is by no means the case that each embodiment contains just one independent technical solution. Such a method of presentation is adopted herein purely for the sake of clarity. Those skilled in the art should consider the description in its entirety. The technical solutions in the various embodiments could also be suitably combined to form other embodiments capable of being understood by those skilled in the art.

The series of detailed explanations set out above are merely particular explanations of feasible embodiments of the present disclosure, which are not intended to limit the scope of protection thereof which is defined by the appended claims. All equivalent embodiments or changes made without departing from the present disclosure, such as feature combinations, separations or repetitions, shall be included in the scope of protection thereof.

## Claims

1. A valve assembly, the valve assembly comprising:
a valve body (10) forming an internal cavity, the valve body (10) further comprising a valve seat part (12), the valve seat part (12) being located in the internal cavity and dividing the internal cavity of the valve body (10) into an inlet channel (14) and an outlet channel (16), a communication port (13) being formed in the valve seat part (12), the communication port connecting the inlet channel (14) and the outlet channel (16), and a mounting port (18) also being formed in the valve body (10), the mounting port (18) facing the communication port (13);
a valve cap (20), adapted to be mounted at the mounting port (18) ;
a valve rod (30), movably passed through the valve cap (20);
a valve plug (40), mounted to one end of the valve rod (30) and able to extend into the internal cavity under the driving action of the valve rod (30), the valve plug (40) having a neck part (44) extending in the axial direction thereof and an end part (46) extending out transversely from the neck part (44), wherein, in a closed position, the end part (46) abuts the valve seat part (12), thereby blocking fluid communication at the communication port (13), and in an open position, the end part (46) is remote from the communication port (13), thereby enabling fluid communication;
a sealing member (50), being a flexible sealing member, and configured to at least envelop the valve plug (40) and a side of the valve cap (20) which faces the communication port (13), so as to isolate the valve cap (20), the valve rod (30) and the valve plug (40) from the internal cavity of the valve body (10) in a sealed manner;
wherein the sealing member (50) has a redundant part (54); when the valve plug (40) is at an open position, the redundant part (54) is piled at the neck part (44) of the valve plug (40) ;
**characterised in that** the valve cap (20) has a keyway (28) at a side remote from the communication port (13) so that a tool can be used to screw the valve cap (20) into the mounting port (18) of the valve body (10).

2. The valve assembly as claimed in claim 1, wherein the valve cap (20) is embedded in the mounting port (18).

3. The valve assembly as claimed in claim 1, wherein the valve cap (20) has a recess (26) at a side facing the communication port (13),
one end of the valve rod (30) passing through the valve cap (20) and extending into the recess (26);
an upper end of the neck part (44) of the valve plug (40) extends into the recess (26) of the valve cap (20) movably, and is securely connected to the valve rod (30);
wherein a sealing ring (60) is provided between the neck part (44) of the valve plug (40) and an inner wall of the recess (26).

4. The valve assembly as claimed in claim 3, wherein a circumferentially extending groove (442) is formed on a peripheral surface of the neck part (44), for the purpose of accommodating the sealing ring (60).

5. The valve assembly as claimed in claim 1, wherein the valve cap (20) has a body (22) and a security ring part (24) extending out from the body (22), wherein
the body (22) is completely embedded in the mounting port (18) ;
the security ring part (24) has a smaller diameter than the internal diameter of the mounting port (18) and extends out of the mounting port (18), and the security ring part (24) is adapted to be connected through engagement to an actuator for controlling the valve assembly.

6. The valve assembly as claimed in claim 5, wherein an inner wall of the mounting port (18) of the valve body (10) is provided with an internal thread, and an outer wall of the body (22) of the valve cap (20) is provided with an external thread, wherein a thread-locking adhesive is applied between the internal thread and the external thread.

7. The valve assembly as claimed in claim 1, wherein a slot (32) is provided on an end face at that end of the valve rod (30) which is positioned outside the valve cap (20), for the purpose of installing or removing the valve rod (30).

8. The valve assembly as claimed in claim 1, wherein the sealing member (50) is an elastic diaphragm.

9. A control valve assembly, the control valve assembly comprising:
an actuator; and
a valve assembly as claimed in any one of claims 1 - 8,
wherein the actuator can be connected to the valve rod (30) and can drive the valve rod (30) to move axially relative to the valve cap (20), thereby driving the valve plug (40) to shift between the open position and the closed position.

## Patentansprüche

1. Ventilbaugruppe, die Folgendes umfasst:
einen Ventilkörper (10), der einen Innenhohlraum bildet, wobei der Ventilkörper (10) ferner einen Ventilsitzteil (12) umfasst, der sich in dem Innenhohlraum befindet und den Innenhohlraum des Ventilkörpers (10) in einen Einlasskanal (14) und einen Auslasskanal (16) unterteilt, wobei in dem Ventilsitzteil (12) ein Verbindungsanschluss (13) ausgebildet ist, der den Einlasskanal (14) und den Auslasskanal (16) verbindet, und in dem Ventilkörper (10) auch ein Montageanschluss (18) ausgebildet ist, der zum Verbindungsanschluss (13) weist,
eine Ventilkappe (20), die so ausgelegt ist, dass sie sich an den Montageanschluss (18) montieren lässt,
eine Ventilspindel (30), die beweglich durch die Ventilkappe (20) geführt ist,
einen Ventilkegel (40), der an ein Ende der Ventilspindel (30) montiert ist und von der Ventilspindel (30) in den Innenhohlraum ausgefahren werden kann, wobei der Ventilkegel (40) einen in seiner axialen Richtung verlaufenden Halsteil (44) und einen vom Halsteil (44) aus quer verlaufenden Endteil (46) aufweist, wobei der Endteil (46) in geschlossener Position an dem Ventilsitzteil (12) anliegt und dadurch eine Fluidverbindung am Verbindungsanschluss (13) verhindert und in offener Position vom Verbindungsanschluss (13) entfernt liegt und so eine Fluidverbindung ermöglicht,
ein Dichtungselement (50), bei dem es sich um ein flexibles Dichtungselement handelt und das so konfiguriert ist, dass es zumindest den Ventilkegel (40) und eine zum Verbindungsanschluss (13) weisende Seite der Ventilkappe (20) umhüllt und so die Ventilkappe (20), die Ventilspindel (30) und den Ventilkegel (40) gegenüber dem Innenhohlraum des Ventilkörpers (10) abdichtet,
wobei das Dichtungselement (50) einen redundanten Teil (54) aufweist, der, wenn sich die Ventilspindel (40) in einer offenen Position befindet, an dem Halsteil (44) der Ventilspindel (40) zusammengedrückt wird,
**dadurch gekennzeichnet, dass** die Ventilkappe (20) an einer zu dem Verbindungsanschluss (13) entfernt liegenden Seite eine Keilnut (28) aufweist, so dass die Ventilkappe (20) mithilfe eines Werkzeugs in den Montageanschluss (18) des Ventilkörpers (10) geschraubt werden kann.

2. Die Ventilbaugruppe nach Anspruch 1, wobei die Ventilkappe (20) in den Montageanschluss (18) eingebettet ist.

3. Die Ventilbaugruppe nach Anspruch 1, wobei die Ventilkappe (20) an einer zum Verbindungsanschluss (13) weisenden Seite eine Aussparung (26) aufweist,
ein Ende der Ventilspindel (30) durch die Ventilkappe (20) hindurch in die Aussparung (26) verläuft,
ein oberes Ende des Halsteils (44) des Ventilkegels (40) beweglich in die Aussparung (26) der Ventilkappe (20) verläuft und fest mit der Ventilspindel (30) verbunden ist,
wobei zwischen dem Halsteil (44) des Ventilkegels (40) und einer Innenwand der Aussparung (26) ein Dichtungsring (60) vorgesehen ist.

4. Die Ventilbaugruppe nach Anspruch 3, wobei an einer Umfangsfläche des Halsteils (44) eine in Umfangsrichtung verlaufende Nut (442) ausgebildet ist, die zum Aufnehmen des Dichtungsrings (60) dient.

5. Die Ventilbaugruppe nach Anspruch 1, wobei die Ventilkappe (20) einen Hauptteil (22) und einen Sicherungsringteil (24) aufweist, der von dem Hauptteil (22) ausgeht, wobei der Hauptteil (22) vollständig in den Montageanschluss (18) eingebettet ist,
der Sicherungsringteil (24) einen Durchmesser aufweist, der geringer ist als der Innendurchmesser des Montageanschlusses (18), und von dem Montageanschluss (18) ausgeht und so ausgelegt ist, dass er sich durch Eingreifen in ein Stellelement zum Regeln der Ventilbaugruppe verbinden lässt.

6. Die Ventilbaugruppe nach Anspruch 5, wobei eine Innenwand des Montageanschlusses (18) des Ventilkörpers (10) mit einem Innengewinde und eine Außenwand des Hauptteils (22) der Ventilkappe (20) mit einem Außengewinde versehen ist, wobei zwischen dem Innen- und dem Außengewinde eine Gewindedichtmasse aufgetragen ist.

7. Die Ventilbaugruppe nach Anspruch 1, wobei an einer Stirnseite an dem Ende der Ventilspindel (30), die außerhalb der Ventilkappe (20) angeordnet ist, ein Schlitz (32) vorgesehen ist, der dem Einsetzen oder Herausnehmen der Ventilspindel (30) dient.

8. Die Ventilbaugruppe nach Anspruch 1, wobei es sich bei dem Dichtungselement (50) um eine elastische Membran handelt.

9. Automatisierte Ventilbaugruppe, die Folgendes umfasst:
ein Stellelement und
eine Ventilbaugruppe nach einem der Ansprüche 1-8, wobei das Stellelement mit der Ventilspindel (30) verbunden werden und diese in Bezug auf die Ventilkappe (20) axial bewegen kann, wodurch es den Ventilkegel (40) dazu bringt, zwischen der offenen und der geschlossenen Position zu wechseln.

## Revendications

1. Ensemble soupape, l'ensemble soupape comprenant :
un corps de soupape (10) formant une cavité interne, le corps de soupape (10) comprenant également un siège de soupape (12), le siège de soupape (12) étant situé dans la cavité interne et divisant la cavité interne du corps de soupape (10) en un canal d'entrée (14) et un canal de sortie (16), un port de communication (13) étant formé dans le siège de soupape (12), le port de communication (13) connectant le canal d'entrée (14) et le canal de sortie (16) et un port de montage (18) étant également formé dans le corps de soupape (10), le port de montage (18) faisant face au port de communication (13) ;
un capuchon de soupape (20) adapté afin d'être monté sur le port de montage (18) ;
une tige de soupape (30) passée de manière mobile à travers le capuchon de soupape (20) ;
un robinet de soupape (40) monté sur une extrémité de la tige de soupape (30) et pouvant s'étendre dans la cavité interne sous l'action conductrice de la tige de soupape (30), le robinet de soupape (40) possédant un col (44) s'étendant dans la direction axiale de celui-ci et une partie finale (46) s'étendant transversalement depuis le col (44), dans lequel, en position fermée, la partie finale (46) engage le siège de soupape (12), bloquant ainsi la communication du fluide au port de communication (13), et en position ouverte, la partie finale (46) est isolée du port de communication (13) permettant ainsi la communication du fluide ;
un joint d'étanchéité (50) qui est un joint d'étanchéité souple et conçu pour envelopper au moins le robinet de soupape (40) et un côté du capuchon de soupape (20) qui fait face au port de communication (13), afin d'isoler le capuchon de soupape (20), la tige de soupape (30) et le robinet de soupape (40) de la cavité interne du corps de soupape (10) de manière étanche ;
dans lequel le joint d'étanchéité (50) possède une partie redondante (54) ; lorsque le robinet de soupape (40) est en position ouverte, la partie redondante (54) est empilée sur le col (44) du robinet de soupape (40) ;
**caractérisé en ce que** le capuchon de soupape (20) possède une rainure (28) sur un côté isolé du port de communication (13) de sorte qu'un outil peut être utilisé pour visser le capuchon de soupape (20) dans le port de montage (18) du corps de soupape (10) .

2. L'ensemble soupape selon la revendication 1 dans lequel le capuchon de soupape (20) est intégré dans le port de montage (18) .

3. L'ensemble soupape selon la revendication 1 dans lequel le capuchon de soupape (20) possède un retrait (26) sur un côté face au port de communication (13),
une extrémité de la tige de soupape (30) passant à travers le capuchon de soupape (20) et s'étendant dans le retrait (26) ;
une extrémité supérieure du col (44) du robinet de soupape (40) s'étend dans le retrait (26) du capuchon de soupape (20) de manière mobile et est connecté de manière sécurisée à la tige de soupape (30) ;
dans lequel une bague d'étanchéité (60) est disposée entre le col (44) du robinet de soupape (40) et une paroi interne du retrait (26).

4. L'ensemble soupape selon la revendication 3 dans lequel une cannelure s'étendant circonférentiellement (442) est formée sur une surface périphérique du col (44), dans le but de recevoir la bague d'étanchéité (60).

5. L'ensemble soupape selon la revendication 1 dans lequel le capuchon de soupape (20) possède un corps (22) et une bague de sécurité (24) qui s'étend depuis le corps (22), dans lequel le corps (22) est complètement intégré dans le port de montage (18) ;
la bague de sécurité (24) possède un diamètre inférieur au diamètre interne du port de montage (18) et s'étend à l'extérieur du port de montage (18) et la bague de sécurité (24) est adaptée afin d'être connectée par engagement dans un actionneur pour le contrôle de l'ensemble soupape.

6. L'ensemble soupape selon la revendication 5 dans lequel une paroi interne du port de montage (18) du corps de soupape (10) est doté d'un fil interne et une paroi externe du corps (22) du capuchon de soupape (20) est doté d'un fil externe, dans lequel un adhésif verrouillant les fils est appliqué entre le fil interne et le fil externe.

7. L'ensemble soupape selon la revendication 1 dans lequel une encoche (32) est disposée sur une face finale à l'extrémité de la tige de soupape (30) qui est positionnée à l'extérieur du capuchon de soupape (20), dans le but d'installer ou de retirer la tige de soupape (30).

8. L'ensemble soupape selon la revendication 1 dans lequel le joint d'étanchéité (50) est un diaphragme élastique.

9. Ensemble soupape de commande, l'ensemble soupape de commande comprenant :
un actionneur ; et
un ensemble soupape selon l'une quelconque des revendications 1 à 8, dans lequel l'actionneur peut être connecté à la tige de soupape (30) et peut diriger la tige de soupape (30) dans un déplacement axial par rapport au capuchon de soupape (20), dirigeant ainsi le robinet de soupape (40) entre la position ouverte et la position fermée.
